# EUROPÄISCHE PATENTANMELDUNG

(11) **EP 2 091 221 A1**
(43) Veröffentlichungstag der Anmeldung: **19.08.2009**
(21) Anmeldenummer: 09001868.0
(22) Anmeldetag: 11.02.2009
(51) Int. Cl.: H04M 3/42

(54) **Telekommunikationsanlage**

(30) Priorität: 15.02.2008 DE 102008009416
(71) Anmelder: Vertico software GmbH, 76133 Karlsruhe (DE)
(72) Erfinder: Buzin, Florian, 76187 Karlsruhe (DE); Mauve, Barbara, 76135 Karlsruhe (DE)
(74) Vertreter: Geitz Truckenmüller Lucht

(57) **Zusammenfassung**

Bekannte Telefonanlagen umfassen meist lediglich die erforderliche Funktionalität, um Kommunikationsverbindungen zwischen den Teilnehmern herzustellen. Es ist auch bekannt, solche Telefonanlagen für den Benutzer programmierbar zu gestalten und dadurch Sonderfunktionen und Anpassungen zu ermöglichen. Die Programmierung soll durch die Erfindung vereinfacht und um weitere Möglichkeiten erweitert werden.

Hierzu wird eine Benutzerschnittstelle zur einfachen Programmierung von Funktionen und Modulen nach dem Baukastenprinzip vorgesehen, mit deren Hilfe unterschiedlichste Endgeräte über das Telefon als Steuergerät steuerbar sind.

Steuerung von Endgeräten über eine Telefonanlage.

## Beschreibung

Die vorliegende Erfindung betrifft eine Telekommunikationsanlage mit offenen Schnittstellen zur Herstellung einer Datenverbindung mit Endgeräten sowie einer Verwaltungseinrichtung zur Verwaltung dieser Endgeräte, wobei die Verwaltungseinrichtung über eine Benutzerschnittstelle programmierbar ist, welche die Erstellung von Funktionen und/oder Modulen zur Steuerung der Endgeräte aus vorgefertigten Funktionsbausteinen erlaubt.

Grundsätzlich besteht eine klassische Telekommunikationsanlage aus drei wesentlichen Komponenten, nämlich einer Vermittlungsstelle, einem Dialplan und einer Routing-Datenbank. Die Vermittlungsstelle führt hierbei die Kommunikation einer solchen Telefonanlage mit externen Telefoniegeräten durch.

Der Dialplan enthält die zentrale Logik, die zur Durchstellung von Telefongesprächen an das jeweils angewählte Ziel erforderlich ist. Er steuert die Vermittlungsstelle, um den Rufaufbau beziehungsweise den Rufabbau abzuwickeln. Bei der Routing-Datenbank handelt es sich um einen Informationsspeicher, welcher Informationen über die Zuordnung von Rufnummern und Teilnehmern enthält. Sie wird vom Dialplan benutzt, um zu ermitteln, wohin Telefongespräche durchgestellt werden müssen.

Es ist bereits bekannt, dass solche Telefonanlagen von einem Benutzer individuell programmiert werden können. So ist es beispielsweise üblich, einem Apparat eine Telefonnummer zuzuordnen, die dieser Apparat dann etwa auch an eine andere Leitung mitnehmen kann.

Allerdings ist es hierbei üblicherweise lediglich möglich, vorgegebene Funktionen für bestimmte Endgeräte einzusetzen und zu konfigurieren. Die Änderung von Funktionen oder die Erstellung neuer Funktionen erfordert fundiertere Kenntnisse, welche die durchschnittlichen Fähigkeiten der Benutzer oftmals übersteigen.

Vor diesem Hintergrund liegt der Erfindung die Aufgabe zu Grunde, eine Telekommunikationsanlage zu schaffen, welche die Möglichkeit einer weit reichenden Individualisierung der Funktionen ermöglicht, wobei die Erstellung der Funktionen für den durchschnittlichen Benutzer vereinfacht und veranschaulicht wird.

Dies gelingt durch eine Telekommunikationsanlage gemäß den Merkmalen des Hauptanspruchs. Weitere sinnvolle Ausgestaltungen der erfindungsgemäßen Telekommunikationsanlage können den Unteransprüchen entnommen werden.

Erfindungsgemäß ist vorgesehen, dass die Telekommunikationsanlage über offene Schnittstellen mit ihren Endgeräten verbunden ist. Dabei können Endgeräte sowohl Telefone als auch jedwede andere Form von elektrischen Geräten sein. Erforderlich ist lediglich, dass das als Endgerät eingesetzte elektrische Gerät ein elektrisches Stellsignal erfordert. Dieses Stellsignal kann dann über ein hierfür vorgesehenes Stellgerät ausgelöst werden, welches ein entsprechendes Steuersignal von der Telekommunikationsanlage bekommt. Um eine Vielzahl unterschiedlicher Stellbefehle zu erzeugen und auch Programmabläufe zu implementieren, ist die Programmierung von Funktionen und Modulen vorgesehen. Diese können aus einzelnen, vorgegebenen oder auch frei programmierbaren Funktionsbausteinen zusammengestellt werden, so dass eine Bearbeitung eines zu erstellenden Moduls lediglich auf gestalterischer, nicht aber auf der Programmierebene erfolgen muss. Die Gestaltung erfolgt hierbei über eine Benutzerschnittstelle, welche vorzugsweise als grafische Oberfläche ausgestaltet ist, und welche die Erstellung der Module für den Benutzer vereinfacht und diese unterstützt.

Indes ist es ergänzend auch möglich, Module direkt frei zu schreiben und auf die nach dem Baukastenprinzip funktionierende Benutzerschnittstelle zu verzichten. Auf diese Weise ist die Telekommunikationsanlage gleichermaßen für mehr und für weniger versierte benutzer attraktiv.

Nachdem ein Modul implementiert ist, muss es auch instanziiert werden, also einer Befehlskette in Form eines Programms auch die ausführende Instanz, also ein Endgerät, zugeordnet werden. Sobald dies erfolgt ist, kann das Endgerät mit einem Befehl angesprochen werden. Der Vorteil der Verwendung einer Telekommunikationsanlage ist hierbei erstens, dass diese praktisch im ganzen Haus verteilt vorhanden ist und zweitens, dass das Telefon als ideales Eingabegerät zur Steuerung der programmierten Funktionen zur Verfügung steht. Zur Steuerung eines Endgeräts wird diesem also bei der Instanziierung eine Rufnummer zugewiesen, so dass ein Stellsignal beim Wählen der Rufnummer durch einen Benutzer - eine Berechtigung des Benutzers kann erfordert werden - erzeugt wird und hierauf das Endgerät reagiert. Bei einer Treppenhausbeleuchtung könnte beispielsweise durch einen Anruf bei der entsprechenden Nummer durch den Hausmeister ein Einschaltvorgang ausgelöst werden, bei nächsten Anruf wiederum ein Ausschaltvorgang. Es ist für den Benutzer dadurch nicht erforderlich, ein spezielles Steuergerät vorzusehen. Zudem ist das Telefon als Steuergerät für jeden verständlich und bekannt.

Die Telekommunikationsanlage kann einerseits zwar hardwaremäßig vorhanden sein, alternativ besteht jedoch auch die Möglichkeit, dass sie rein virtuell auf einem Computer, beispielsweise auf einem ohnehin vorhandenen Server, implementiert ist. Dies ist insbesondere deshalb sinnvoll, weil auch eine Erstellung der Module und Funktionen mit Vorteil am Rechner erfolgt. Dies ist zwar nicht notwendig, da auch eine grafische Gestaltung etwa an einem Handheld-PC oder einem anderen grafischen Eingabegerät erfolgen kann, in der Praxis aber sinnvoll.

Insbesondere ist eine Programmierung nämlich grafisch dadurch zu leisten, dass ein Ablaufdiagramm erstellt wird, welcher Baustein für Baustein die Abläufe innerhalb des Moduls darstellt. So werden etwa nacheinander ablaufende Schritte beispielsweise untereinander angeordnet; Alternative Schritte können dann entweder durch Einrückungen oder durch eine Anordnung in gleicher Höhe realisiert und visualisiert werden.

Im Hinblick auf die zu verwendenden offenen Schnittstellen ist es mitunter auch sinnvoll, wenn die erstellten Funktionen zunächst einmal plattformunabhängig in einer Sprache wie XML erstellt werden und zur Ausführung übersetzt werden, etwa in Java oder in Binärcode. Dies fördert die Unabhängigkeit der einzelnen Funktion bzw. des einzelnen Moduls von der konkreten zu steuernden Instanz.

Die Telekommunikationsanlage weist als zentrale Verwaltungseinheit für die entwickelten Module ein Modul-Framework auf. Das Modul-Framework kommuniziert mit dem Dialplan durch dort eingebaute Einstiegspunkte. Dies erlaubt es dem Modul-Framework, auf bestimmte Ereignisse in der Abarbeitung eines Anrufes zu reagieren, zu bestimmen, ob eine Modulinstanz den Anruf behandeln soll und gegebenenfalls die Anrufbehandlung dieser Modulinstanz zu überlassen. Des Weiteren stellt das Modul-Framework den Modulen Telefoniefunktionen zur Verfügung, wozu es direkt mit der Vermittlungsstelle kommunizieren kann.

Als Teil des Modul-Frameworks ist die Modul-Laufzeitumgebung dafür zuständig den Programmcode der Module auszuführen und dabei dafür zu sorgen, dass die benötigten Laufzeitinformationen über den zu bearbeitenden Anruf zur Verfügung stehen, sowie im Auftrag des Moduls Vorgänge im Dialplan auszulösen.

Eine Verwaltung der Module innerhalb des Modul-Frameworks erfolgt durch einen Administrator über eine gesonderte Modul-Manager-Software. Sie erlaubt es ihm, zu sehen, welche Module und Modulinstanzen in der Telekommunikationsanlage zu einem bestimmten Zeitpunkt vorhanden sind. Darüber hinaus kann er mit dem Modul-Manager Module im- und exportieren sowie Modulinstanzen erzeugen, entfernen und konfigurieren. Dies kann etwa auch über die Benutzerschnittstelle, gegebenenfalls in angepasster Form, erfolgen.

In einer Modul-Bibliothek werden alle in der Telefonanlage vorhandenen Module und Modulinstanzen verwaltet. Zudem kann das Modul-Framework eine beliebige Anzahl Module aus dem Internet oder anderen Medien (CD-ROM, USB-Stick) in die Modul-Bibliothek importieren oder auch von dort exportieren.

Der Modul-Timer schließlich ist ein Teil des Modul-Frameworks, der es dem Administrator oder Modul-Entwickler erlaubt, bestimmte zeitgesteuerte Programmteile von Modulen anzustoßen.

Mit Vorteil ist es möglich, die Telekommunikationsanlage auch aus der Ferne zu programmieren. Dies kann etwa dadurch geleistet werden, dass die Benutzerschnittstelle als Webinterface ausgestaltet wird, welches die Module direkt in der Telekommunikationsanlage speichert. So kann eine Programmierung oder auch eine Änderung von jedem internetfähigen Rechner erfolgen. Zudem kann auch bei einem inhouse-Einsatz die Distribution entsprechender Software entfallen.

Die Anzahl der von der Telekommunikationsanlage verwalteten Endgeräte soll mit Vorteil nicht begrenzt sein, sondern vielmehr frei skalierbar, in jedem Fall aber erweiterbar sein.

Soweit ein Fehler im System auftritt, erscheint es sinnvoll, den Benutzer hiervon zu informieren. Während des Anrufs wird dem Benutzer daher bei Erfolg eine Erfolgsmeldung als Audiodatei abgespielt, bei einem Misserfolg entsprechend eine andere Audiodatei, welche vorzugsweise den Fehler beschreibt. Zudem ist es sinnvoll, wenn die Telekommunikationsanlage eine Fehlermeldung mit einer Fehlerbeschreibung an einen Administrator sendet, vorzugsweise an den für das fehlerhafte Endgerät zuständigen Administrator. Dies kann etwa per E-Mail erfolgen.

Die vorstehend beschriebene Erfindung wird im Folgenden anhand eines Ausführungsbeispiels näher erläutert.

Es zeigen
- Figur 1: eine Telekommunikationsanlage in einer schematischen Darstellung als Block- schaltbild,
- Figur 2: einen Bildschirmausdruck einer Benut- zerschnittstelie zum Erstellen von Modulen, und
- Figur 3: einen Bildschirmausdruck eines Modul- Managers zum Verwalten und instan- ziieren von Modulen.

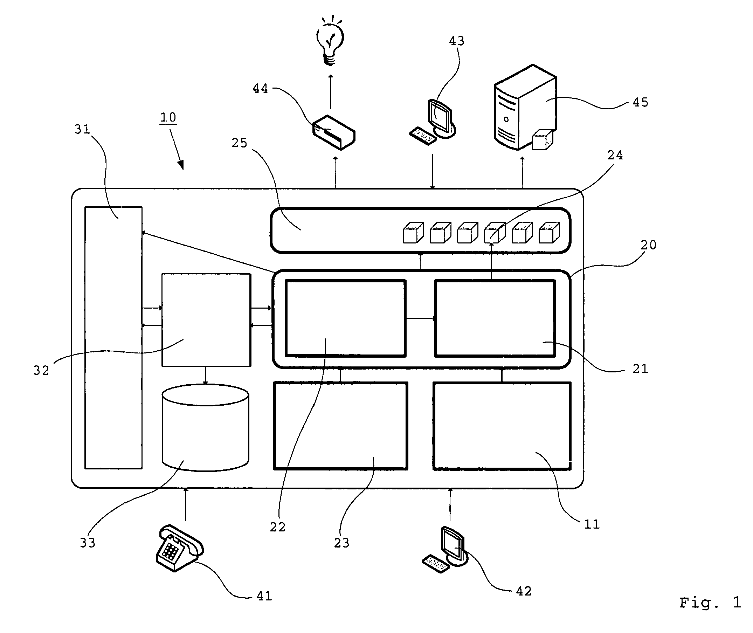

Figur 1 zeigt eine Telekommunikationsanlage 10 in einer schematischen Darstellung. Es wird als Beispiel ein Szenario beschrieben, in welchem über die Telekommunikationsanlage 10 eine Lichtanlage 44 gesteuert werden soll. Diese Lichtanlage 44 versorgt Lampen mit Elektrizität. Ziel der Anordnung ist im vorliegenden Fall, dass ein Benutzer 41 über ein Telefon durch einen Anruf bei einer bestimmten Rufnummer das Licht der Lichtanlage 44 einschalten kann. Der Benutzer 41 soll dabei per Ansage darüber informiert werden, ob das aktivieren des Lichtes erfolgreich war oder nicht. Darüber hinaus soll im Fehlerfall eine E-Mail an einen Administrator 42 für die Lichtanlage 44 verschickt werden.

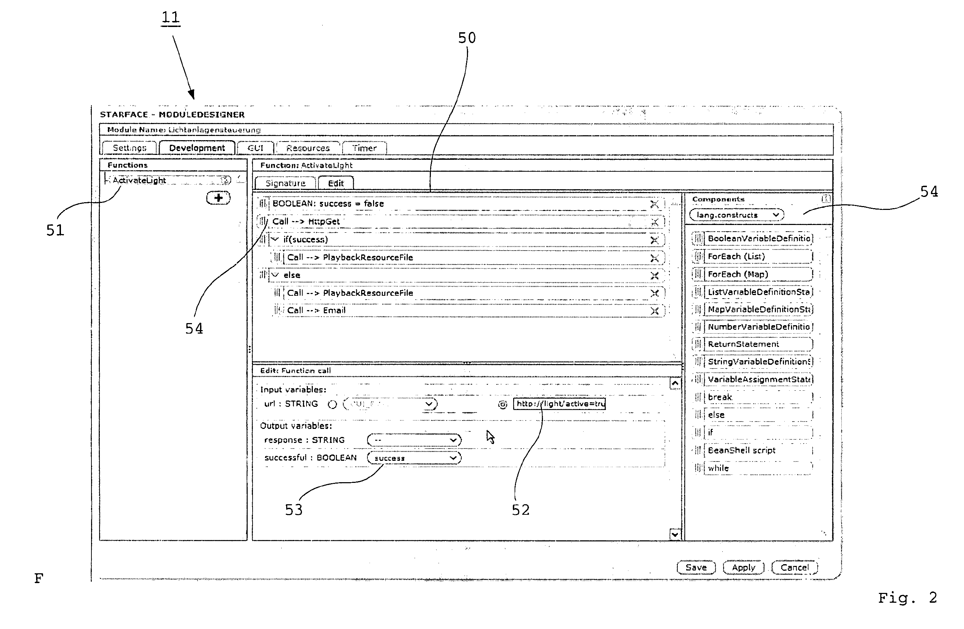

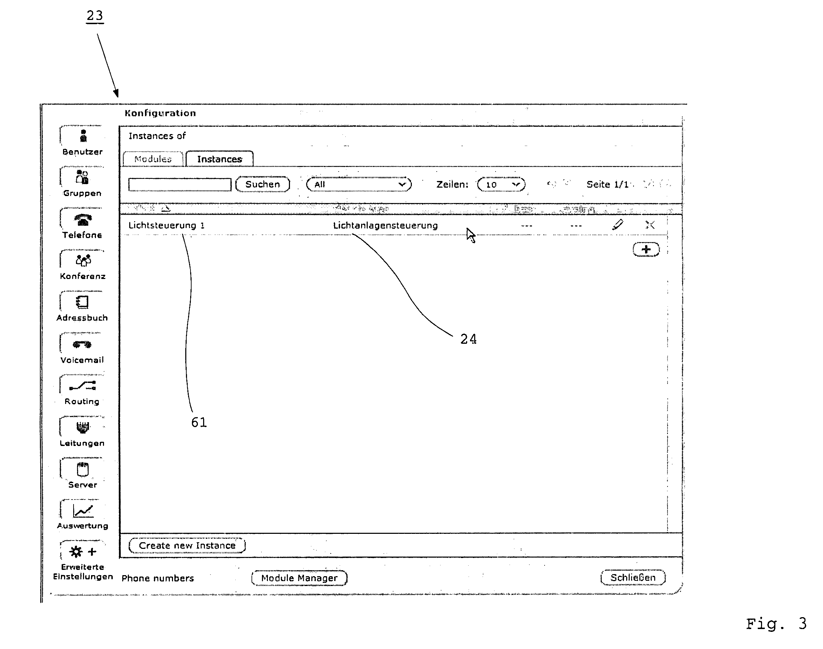

Es soll nun zunächst die Entwicklung und Instanziierung eines entsprechenden Moduls 24 beschrieben werden, welche in Figuren 2 und 3 beschrieben sind. Anschließend soll zu Figur 1 zurückgekehrt werden.

Figur 2 zeigt eine Benutzerschnittstelle 11 in Form eines Webinterfaces. Mittels der Benutzerschnittstelle 11 kann von einem Modul-Entwickler 43 in einfacher Weise nach dem Baukastenprinzip ein Modul 24 zur Steuerung der Lichtanlage 44 erstellt werden. Dazu wird in der Benutzeroberfläche 11 zunächst ein neues Modul angelegt.

Anschließend wird der Modul-Entwickler 43 dazu aufgefordert, dem neuen Modul 24 eine Funktion 51 hinzuzufügen, welche die benötigte Logik enthält. Eine solche Funktion 51 existiert zu diesem Zeitpunkt noch nicht, so dass diese nunmehr zu erstellen ist. Dazu kann ein Name für die Funktion 51 vergeben werden. Im Beispiel ist dies "ActivateLight".

In einem nächsten Schritt kann die gewünschte Funktion 51 erstellt werden. Dazu wird in der zuvor erstellten Funktion 51 "ActivateLight" ein Ablaufdiagramm 50 festgelegt. Das Ablaufdiagramm 50 kann in einfacher Weise dadurch erstellt werden, dass in einem Katalog vorgehaltene Funktionsbausteine 54 nach Bedarf per drag&drop in ihrer zeitlichen Abfolge aneinandergereiht werden. Die vorgefertigten Funktionsbausteine 54 werden von anderen Modulen oder aus einer Modul-Bibliothek 25 zur Verfügung gestellt. In der beispielhaft herausgegriffenen Konfiguration der "HttpGet"-Komponente erfolgt die Einstellung der Parameter so, dass sie über eine Anweisung 52 "http://light/activate=TRUE" die Lichtanlage aufruft und den Erfolg dieser Operation als Rückgabewert 53 "success" speichert.

Im Erfolgsfall soll eine Ansage an den Benutzer 41 ausgegeben werden. Dazu wird ihm etwa eine zuvor hochgeladene Audiodatei vorgespielt, welche den Erfolg der Operation meldet.

Im Fehlerfall wird ebenfalls eine Ansage abgespielt und zusätzlich über einen E-Mail-Server 45 eine E-Mail an den Administrator 42 der Lichtanlage 44 versendet.

Nachdem das Modul 24 auf diese Weise erstellt wurde ist es bereit, in Betrieb genommen zu werden. Dies ist in der folgenden Figur 3 gezeigt.

Um das Modul 24 in Betrieb zu nehmen muss zunächst eine Instanz 61 erzeugt werden. Eine Instanz 61 ist stets einem Objekt zugeordnet, hier also der Lichtanlage 45. Es können beliebig viele Instanzen 61 eines Moduls 24 erstellt werden, je nachdem wie viele Objekte mit der gleichen Funktionalität vorhanden sind und auf die gleiche Art und Weise gesteuert werden sollen.

Im Rahmen der Konfiguration der Instanz 61 muss dieser schließlich auch eine Rufnummer zugeordnet werden, mit der die Funktionalität ausgelöst werden kann. Dies hat in dem Beispiel zur Folge, dass nun alle Anrufe an diese Nummer zu einer Aktivierung der Instanz 61 des Moduls 24 und damit im Erfolgsfall auch der Lichtanlage 44 und schließlich des Lichtes führen.

Zur Veranschaulichung der Funktionsweise des Moduls wird im Folgenden nochmals auf die Figur 1 Bezug genommen, an der in einem kleinen Szenario der Ablauf eines Steuerungsvorgangs erläutert werden soll.

In einem ersten Schritt ruft ein Benutzer 41 die Telekommunikationsanlage 10 mit der Rufnummer der Lichtanlage 44 an. Eine Vermittlungsstelle 31 verarbeitet die Anrufsignalisierung und delegiert die Weiterleitung des Anrufs an einen Dialplan 32. Der Dialplan 32 stellt aufgrund von in einer Routing-Datenbank 33 hinterlegten Regeln fest, dass der Anruf einer Instanz 61 zugeordnet ist, weist die Vermittlungsstelle 31 an, den Anruf entgegen zu nehmen und delegiert die Anrufbehandlung an das Modul-Framework 20. Eine Modul-Laufzeitumgebung 21 führt nun die Funktion "ActivateLight" des Moduls 24 aus der Modulbibliothek 25 aus. Die Funktion 51 "ActivateLight" ruft den Funktionsbaustein 54 "HttpGet" aus einem systeminternen Modul auf. Dieser Funktionsbaustein führt den Aufruf an die Lichtanlage 44 durch, welche ihrerseits das Licht einschaltet.

Die Funktion "ActivateLight" ruft die Funktion "Playback-ResourceFile" aus einem systeminternen Modul auf. Diese Funktion veranlasst die Vermittlungsstelle 31 dazu, die im Modul gespeicherte Ansagendatei im Telefongespräch wiederzugeben, also eine Erfolgsmeldung abzuspielen. Im Falle des Misserfolgs würde eine entsprechende Misserfolgsansage erfolgen und eine E-Mail über einen E-Mail-Server 45 an den für die Lichtanlage 45 zuständigen Administrator 42 verschicken. Soweit Veränderungen am Modul 24 erforderlich wären, könnte der Administrator 42 diese über einen Modul-Manager 23 oder eine Benutzeroberfläche 11 besorgen.

Vorstehend ist somit eine Telekommunikationsanlage beschrieben, welche es ermöglicht, eine einfache und individuelle Programmierung von Endgeräten vorzunehmen und diese über eine Telefonanlage zu steuern. Dabei sind für den Benutzer keine Programmiererfahrungen erforderlich.

### BEZUGSZEICHENLISTE

- 10: Telekommunikationsanlage
- 11: Benutzerschnittstelle
- 20: Modul-Framework
- 21: Modul-Laufzeitumgebung
- 22: Modul-Timer
- 23: Modul-Manager
- 24: Modul
- 25: Modul-Bibliothek
- 31: Vermittlungsstelle
- 32: Dialplan
- 33: Routing-Datenbank
- 41: Benutzer
- 42: Administrator
- 43: Modul-Entwickler
- 44: Lichtanlage
- 45: E-Mail-Server
- 50: Ablaufdiagramm
- 51: Funktion
- 52: Anweisung
- 53: Rückgabewert
- 54: Funktionsbausteine
- 61: Instanz

## Patentansprüche

1. Telekommunikationsanlage mit offenen Schnittstellen zur Herstellung einer Datenverbindung mit Endgeräten sowie einer Verwaltungseinrichtung zur Verwaltung dieser Endgeräte, wobei die Verwaltungseinrichtung über eine Benutzerschnittstelle (11) programmierbar ist, welche die Erstellung von Funktionen (51) und/oder Modulen (24) zur Steuerung der Endgeräte aus vorgefertigten Funktionsbausteinen (54) erlaubt.

2. Telekommunikationsanlage gemäß Anspruch 1, **dadurch gekennzeichnet, dass** die Benutzerschnittstelle (11) ergänzend auch eine freie Programmierung der Funktionen (51) und/oder Module (24) zur Steuerung der Endgeräte erlaubt.

3. Telekommunikationsanlage gemäß einem der Ansprüche 1 oder 2, **dadurch gekennzeichnet, dass** die Endgeräte über die Verwaltungseinrichtung von einem Benutzer (41) mithilfe eines mit der Verwaltungseinrichtung verbundenen Telefons steuerbar sind.

4. Telekommunikationsanlage gemäß einem der vorhergehenden Ansprüche, welche als virtuelle Telefonanlage softwaremäßig auf einem Datenverarbeitungsgerät implementiert ist.

5. Telekommunikationsanlage gemäß einem der vorhergehenden Ansprüche, **dadurch gekennzeichnet, dass** die zu programmierende Funktion (51) mittels der Benutzerschnittstelle (11) in Form eines Ablaufdiagramms (50) erstellbar ist.

6. Telekommunikationsanlage gemäß Anspruch 5, **dadurch gekennzeichnet, dass** eine erstellte Funktion (51) zunächst plattformunabhängig in XML und zur Ausführung schließlich in Java oder Binärcode umsetzbar ist.

7. Telekommunikationsanlage gemäß einem der vorhergehenden Ansprüche, **dadurch gekennzeichnet, dass** Funktionen (51) zu Modulen (24) kombinierbar sind, wobei die Module (24), vorzugsweise in sich abgeschlossene, Programmeinheiten darstellen.

8. Telekommunikationsanlage gemäß Anspruch 7, **dadurch gekennzeichnet, dass** die Verwaltungseinrichtung ein Modul-Framework (20) als zentrale Verwaltungseinheit für die Module (24) aufweist.

9. Telekommunikationsanlage gemäß Anspruch 8, **dadurch gekennzeichnet, dass** das Modul-Framework (20) eine Modul-Laufzeitumgebung (21) aufweist, welche den Programmcode der Module (24) nach Bedarf ausführt.

10. Telekommunikationsanlage gemäß einem der Ansprüche 8 oder 9, **dadurch gekennzeichnet, dass** die Module (24) innerhalb des Modul-Frameworks (20) mittels einer Modul-Manager-Software (23) verwaltbar sind.

11. Telekommunikationsanlage gemäß einem der Ansprüche 7 bis 10, **dadurch gekennzeichnet, dass** vorgefertigte und benutzerseitig erstellte Module (24) und/oder Funktionen (51) wieder verwendbar und in der Modul-Bibliothek (25) abgelegt sind.

12. Telekommunikationsanlage gemäß Anspruch 11, **dadurch gekennzeichnet, dass** vorgefertigte Funktionen (51) und/oder Module (24) über ein Internetportal abrufbar und vorzugsweise der Modul-Bibliothek (25) hinzufügbar sind.

13. Telekommunikationsanlage gemäß einem der Ansprüche 7 bis 12, **dadurch gekennzeichnet, dass** die Module (24) standardisiert aufgebaut sind.

14. Telekommunikationsanlage gemäß einem der vorhergehenden Ansprüche, **dadurch gekennzeichnet, dass** die Benutzerschnittstelle (11) der Verwaltungseinrichtung direkt zugeordnet ist oder dass es sich um ein Webinterface handelt.

15. Telekommunikationsanlage gemäß Anspruch 14, **dadurch gekennzeichnet, dass** die Benutzerschnittstelle (11) als grafische Oberfläche ausgestaltet ist.

16. Telekommunikationsanlage gemäß einem der vorhergehenden Ansprüche, **dadurch gekennzeichnet, dass** die Anzahl verwalteter Endgeräte durch Hinzufügen und Entfernen zumindest weitgehend frei skalierbar ist.

17. Telekommunikationsanlage gemäß einem der vorhergehenden Ansprüche, **dadurch gekennzeichnet, dass** die Benutzerschnittstelle (11) eine Verwaltung der Module (24) ermöglicht.

18. Telekommunikationsanlage gemäß einem der vorhergehenden Ansprüche, **dadurch gekennzeichnet, dass** als Endgerät jedes elektrische Gerät mit wenigstens einem Schaltsignal einsetzbar ist.

19. Telekommunikationsanlage gemäß einem der vorhergehenden Ansprüche, **dadurch gekennzeichnet, dass** im Fall eines Fehlers im Endgerät eine Fehlersignalisierung per E-Mail von einem E-Mail-Server (45) an einen Administrator (42), vorzugsweise einen dem Endgerät zugeordneten Administrator, erfolgt.
